# EUROPEAN PATENT APPLICATION

(11) **EP 2 506 150 A1**
(43) Date of publication of application: **03.10.2012**
(21) Application number: 10791437.6
(22) Date of filing: 04.06.2010
(51) Int. Cl.: G06F 15/163

(54) **METHOD AND SYSTEM FOR ENTIRETY MUTUAL ACCESS IN MULTI-PROCESSOR**

(30) Priority: 29.12.2009 CN 200910261740
(71) Applicant: ZTE Corporation, Shenzhen, Guangdong 518057 (CN)
(72) Inventor: LI, Chuang, Shenzhen Guangdong 518057 (CN)
(74) Representative: Jansen, Cornelis Marinus
(86) International application number: PCT/CN2010/073583
(87) International publication number: WO 2010/148931

(57) **Abstract**

The present disclosure discloses a method of complete mutual access of multiple-processors. The method comprises: a separate boot memory and a separate address mapping module are allocated for each processor; the processors perform the mutual access in the multiple-processors through the address mapping module after the processors are booted. The present disclosure also discloses a system for enabling complete mutual access of the multiple-processors. The method and the system creates the advantage of allowing complete mutual access of the multiple-processors, thereby sharing address space in the multiple-processors, sharing the peripheral controller and memory, improving expansibility and performance of the system.

## Description

### TECHNICAL FIELD

The present disclosure relates to multiple-processors technology, in particular to a method and system of complete mutual access of multiple processors in a System on Chip (Soc).

### BACKGROUND

With the development of Integrated Circuit (IC) technology and the rapid growth of embedded processing requirements, processor architecture is developing towards to multi-core processor so as to overcome insurmountable complexity and insufficient computing capability in a single-processor system.

Generally speaking, in the prior art, processors of the multi-core processor system in communication field are assigned specific responsibilities and need to manage multiple separate processing tasks respectively, wherein each processing task is accomplished separately by a specific processing module, each specific processing module is allocated with a specific processor and a peripheral set, and each specific processor has a separate address space; as a result, complete mutual access cannot be realized among the processors.

Thus, it is clear that the complete mutual access among multi-processors is not realized in the prior art, which means the resources in a multi-processing system are not shared completely, thereby hindering the processing speed of the data and further affecting normal operation of the service.

### SUMMARY

Based on the above, the main purpose of the present disclosure is to provide a method and system of complete mutual access of multiple-processors to share the resource among processors, so as to improve the data processing speed and guarantee the normal operation of the service.

In order to realize the purpose, the technical solution of the present disclosure is realized in the following:
the present disclosure provides a method of complete mutual access of multiple-processors, the method comprising the following steps:
a separate boot memory and a separate address mapping module are allocated for each processor; and
the mutual access among the multiple processors through the address mapping module is realized after any processor is booted.

In said solution, before the processor is boosted, the method in the solution may further comprise: each processor to be booted is guided after powered on.

In said solution, the method may further comprise: a head address of each processor is mapped to the boot memory corresponding to the processor through the address mapping module during boot initialization of the processor.

In the solution, the method may further comprise: a mailbox for sharing communication is set between each two processors.

In the solution, realizing the mutual access among multiple processors may be specifically as follows: the address mapping module converts a logic address sent out by a processor into a physical address identifiable by another processor so as to realize the mutual access among the processors.

The present disclosure further provides a system of complete mutual access of multiple-processors, the system comprising: a multi-processor module, one or more address mapping modules, an on-chip interconnection bus, and a memory module, wherein
the multi-processor module includes one or more processors for processing all data in the system;
the address mapping module converts a logic address sent out by a processor in the multi-processor module into a corresponding physical address identifiable by another processor;
the on-chip interconnection bus transmits data, data addresses and control signals; and
the memory module includes a main memory and one or more boot memories for storing application programs and data; wherein
each processor corresponds to one boot memory and one address mapping module.

In said solution, the system may further comprise: at least one mailbox and/or at least one peripheral controller, wherein
each mailbox is arranged between each two processors for sharing communication therebetween; and
the peripheral controller carries a peripheral device.

In said solution, the system may further comprise a boot module and/or a Direct Memory Access (DMA) module, wherein
the boot module guides the boot of each processor; and
the DMA module transports data.

In said solution, the on-chip interconnection bus may include at least one level of buses, wherein
a first-level bus is configured to connect the multi-processor module with the memory module; and
a second-level bus or a subordinate level bus is configured to connect a superior bus with the peripheral controller and the mailbox.

In said solution, the system may further comprise a bridge for connecting two levels of buses.

In said solution, the system may further comprise a bypass module for providing the processor with a communication path for directly accessing into the second-level bus without passing through the first-level bus.

The method and system of complete mutual access of multiple-processors provided by the present disclosure have the following characteristics and advantages:
1) The present disclosure provides separate boot memory for each processor so that the boot way is flexible during power-on process. One processor can be booted firstly to serve as a main processor to control the boot of other processors; alternatively, multiple processors can be booted at the same time.
2) With the address mapping mechanism, the present disclosure maps the address space allocated for processing peripheral device by the processor to the address space of the peripheral device corresponding to the processor to be accessed, so that the logic address sent out by the processor exactly corresponds to the physical address of the peripheral device corresponding to the processor to be accessed. As a result, the processor can access into the peripheral device corresponding to the processor to be accessed. Both isomorphic processors and heterogeneous processors are supported, so that all resources have equal statuses for each processor and each processor can share the resources, for example, peripheral devices and memories can be shared among multiple processors.
3) The present disclosure adopts bus layering technology to realize data transmission. A high-speed peripheral device is connected with the first-level bus, and a low-speed peripheral device is connected with the second-level bus, so that the high-speed and low-speed peripheral devices can be integrated well. In addition, the layer number of the buses and the number of the second-level buses can be increased or decreased based on specific applications, therefore, more slave devices can be connected and better expansibility can be obtained.

The present disclosure may further provide a bypass path between a processor and a second-level bus, through which the processor can directly access into a peripheral device connected with the second-level bus without passing through a first-level bus, so that the bandwidth between the processor and the peripheral device is greatly improved, the bandwidth pressure of the first-level bus is reduced and thereby the normal operation of the service is guaranteed.
4) The present disclosure provides mailboxes between any two processors so that only two related processors can access into the mailboxes while other processors have no right to access. Thus, mutual controls among multiple processors can be realized, and the processing task may be performed rapidly and sequentially.

### BRIEF DESCRIPTION OF THE DRAWINGS

Fig. 1 shows a schematic diagram of a structure of a system of complete mutual access of multiple-processors of the present disclosure;
Fig. 2 shows a flowchart of a method of complete mutual access of multiple-processors of the present disclosure;
Fig. 3 shows a schematic diagram of an architecture of an embodiment of the present disclosure;
Fig. 4 shows a flowchart of a method for realizing mutual access in an embodiment of the present disclosure;
Fig. 5 shows a schematic diagram of realizing a boot mapping mechanism in an embodiment of the present disclosure;
Fig. 6 shows a schematic diagram of a processor access mechanism in an embodiment of the present disclosure; and
Fig. 7 is a schematic diagram of a multi-core communication mechanism in an embodiment of the present disclosure.

### DETAILED DESCRIPTION

The present disclosure is further described below with reference to the accompanying drawings and embodiments in detail.

The system of the present disclosure relates to two devices: a master device and a slave device, wherein the master device is a device capable of sending out reading and writing commands actively in the system, such as a processor, a DMA and the like; the slave device is a device that cannot send out reading or writing commands actively in the system, but only can receive reading and writing commands passively, such as a memory, a peripheral controller and the like.

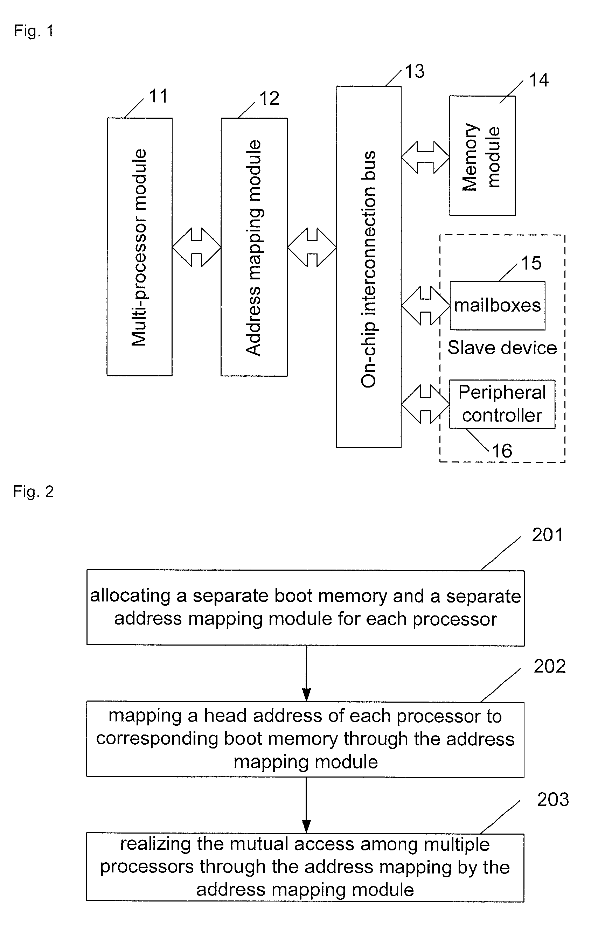

As shown in Fig. 1, the system of complete mutual access of multiple-processors of the present disclosure comprises a multi-processor module 11, an address mapping module 12, an on-chip interconnection bus 13, and a memory module 14.

Here, the multi-processor module 11 is configured to process and compute all data in the system.

Here, the multi-processor module 11 may include multiple processors, such as an ARM, a Digital Signal Processor (DSP), a Microprocessor without Interlocked Piped Stages (MIPS,), a PowerPC processor and the like.

The address mapping module 12 is configured to convert a logic address sent out by a processor in the processor module 11 into a corresponding physical address identifiable by the processor so that the processor can access into corresponding slave device correctly.

Here, each processor has a corresponding separate address mapping module.

The on-chip interconnection bus 13 is configured to transmit data, addresses and control signals.

After the data sent by the multi-processor module 11 is converted by the address mapping module 12 and the control information sent by the multi-processor module 11 is analyzed by the on-chip interconnection bus 13, the data are allocated to corresponding slave devices, such as the memory module 14 and the like.

Here, the on-chip interconnection bus adopts bus layering technology and includes a first-level bus and a second-level bus. An access bridge is configured between the first-level bus and the second-level bus. The first-level bus and the second-level bus may have different clock frequencies, different bandwidths or different data formats or use different protocols. The bridge has a buffering function for buffering the control command and data obtained by the first-level bus into a buffer, then analyzing the received control command, and then allocating the received data to corresponding slave devices based on the protocol of the second-level bus.

The multi-processor module 11 can access into the memory module 14 through the address mapping module 12 and the first-level bus. The second-level bus is connected with a low-speed slave device; and the multi-processor module 11 can access into the slave device connected to the second-level bus through the address mapping module 12, the first-level bus, and the second-level bus. Furthermore, a third-level bus can be connected to the second-level bus to support more slave devices according to needs.

The memory module 14 includes multiple boot memories and a main memory. Each processor corresponds to one separate boot memory for storing programs with fixed address such as the interrupted entrance program and a boot program of the processor. The main memory stores other programs and data except from programs and data stored by the boot memory.

The system further comprises: mailboxes 15, which are for communication between processors, wherein every two processors share one mailbox; a corresponding mailbox can be accessed by two shared processors rather than any other processor.

Specifically speaking, one processor after mapping the address through the address mapping module writes the control information into the mailbox while the other processor after mapping the address through the address mapping module reads the control information out of the mailbox, so as to realize mutual control between the two processors.

The system further comprises: a peripheral controller 16, wherein after the data sent by the multi-processor module 11 is converted by the address mapping module 12 and is transmitted to the on-chip interconnection bus 13, and the control information sent by the multi-processor module 11 is analyzed by the on-chip interconnection bus 13, the data are allocated to corresponding peripheral controller 16 so that the multiple-processors can access into the corresponding peripheral controller 16 correctly.

There is one or more peripheral controllers 16, such as a flash memory (Flash), a Universal Serial Bus (USB), two-line type serial bus (I2C, Inter-Integrated Circuit), a Serial Peripheral Interface (SPI), a Universal Asynchronous Receiver/Transmitter (UART), an audio data bus (I2S, Inter-IC Sound) and the like. Each peripheral controller has different function, for example, the Flash is configured to store the boot program of the processor, USB is configured to connect and communicate with the peripheral device, and I2S is configured to transmit data between audio devices.

The system of complete mutual access of the multiple-processors of the present disclosure maps head address of each processor in the multi-processor module 11 to the corresponding boot memory through the address mapping module 12 after the power-on process; during the operation of the system, the information sent by the processor in the multi-processor module 11, after subjected to the address mapping by the address mapping module 12, is transmitted to the on-chip interconnection bus 13; after the control command in the information is analyzed by the on-chip interconnection bus 13, the data in the information are allocated to the corresponding slave devices, such as the memory module 14, the mailboxes 15 and the peripheral controller 16, according to the corresponding addresses.

During the operation of the multiple-processors system, when processor A in the multi-processor module 11 needs to access to a slave device of processor B, the address mapping module 12 maps the address space of each slave device of processor A to the address space of each slave device corresponding to processor B so that the to-be-accessed logic address sent by processor A just corresponds to the physical address of each slave device of processor B, that is to say, the corresponding slave device of processor B can be accessed and the mutual access between the processors can be realized. The processors realize mutual control through mailbox shared by each two processors so as to ensure the processing task be performed rapidly and in order.

The system further comprises a BOOT module for taking the boot program of each processor out of the Flash when the system is powered on and placing the boot program into the corresponding boot memory of each processor.

The system further comprises a DMA module for transporting data.

The processor in the multi-processor module 11 initializes the DMA controller and proposes a DMA request. After the DMA controller obtaining the control of bus, the processor is held up at once or only performs internal operations. The DMA controller outputs reading and writing commands; and the DMA module can be controlled by multiple processors in the multi-processor module 11.

The system further comprises a bypass module for connecting the processor with the second-level bus so as to form a bypass path.

The use condition for the bypass path is set in the on-chip interconnection bus 13 in advance. That is to say, a processor in the multi-processor module 11 can directly access into the slave device connected with the second-level bus through the bypass path without passing through the first-level bus, so that high bandwidth can be provided between the processor and the peripheral controller 16.

According to said system, the method of complete mutual access of multiple-processors of the present disclosure is shown in Fig. 2, and the method comprises the following steps:
Step 201: a separate boot memory and a separate address mapping module are allocated for each processor; and
Step 202: a head address of each processor is mapped to corresponding boot memory through the address mapping module after the processor is booted.

Before Step 202, the method further comprises: when the system is powered on, the boot program of each processor is taken out of the flash and is placed into the corresponding boot memory of each processor to guide the boot of each processor.

As each processor performs from the head address after being reset, and the addresses allocated to the interrupted entrance programs are fixed, after the head address of each processor is mapped to the corresponding boot memory, the conflicts among the programs stored at the fixed addresses, such as the interrupted entrance programs, of the multiple processors may be avoided.

Step 203: the mutual access among multiple processors is realized through the address mapping by the address mapping module; and the peripheral controllers and memories are shared by the processors.

Here, the bus layering technology is adopted to accomplish the transmission of the data. The bus layering technology is specifically as follows: generally, a high-speed slave device, such as an in-chip memory, an off-chip memory and the like, is directly connected to the first-level bus, wherein the first-level bus is also called as a system bus. The second-level bus is a subordinate bus of the first-level bus and is connected with a low-speed slave device, such as a Flash, a USB, an I2C and the like. If more slave devices are needed for connection and the second-level bus cannot satisfy the need, a third-level bus can be connected to the second-level bus to support more slave devices.

When more than one master devices request for accessing into one slave device at the same time, an arbitrator of the bus system is responsible for arbitration.

Here, the processors accomplish the communication through a mailbox shared by each two processors so as to realize mutual control of the processors.

During the operation of the system, the processing task of the processor can be reduced and the processing speed can be accelerated by the DMA module transportting data.

It is thus clear that, by adopting the described solution of complete mutual access of the multiple-processors, the processors can achieve complete mutual access therebetween, and completely share peripherals and memories, thereby improving system performance. The layer number of the bus can be increased or decreased according to actual needs so as to satisfy the specific application for connecting slave devices.

The solution of the present disclosure is further described below with reference to the embodiments in detail.

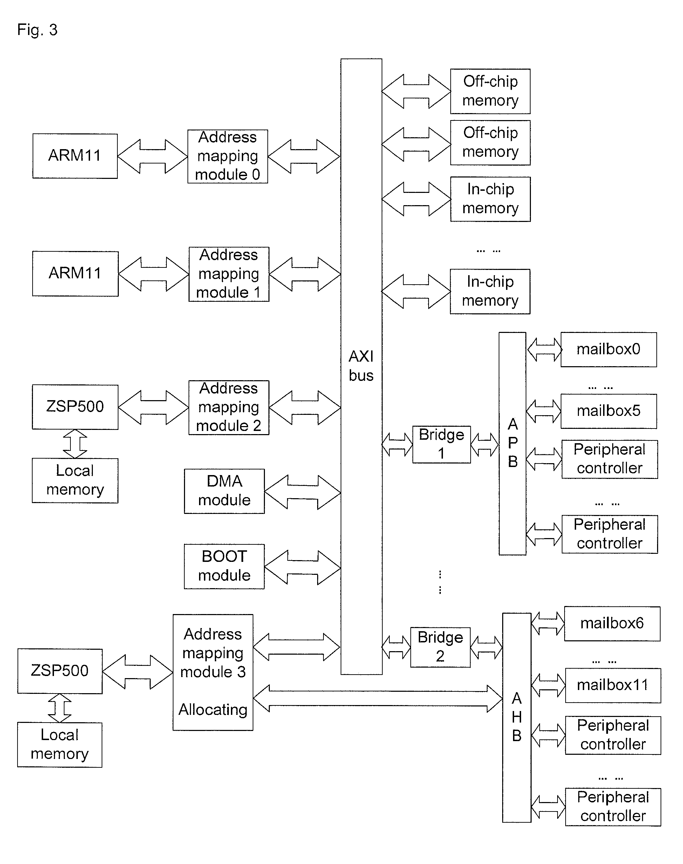

Fig. 3 shows a schematic diagram of an architecture of the embodiment. As shown in Fig. 3, the system of the embodiment comprises: two ARM11 processors and two ZSP500 processors, for processing and computing all data in the system.

Here, the data bit width of the ARM11 processor is 64bit, the address bit width thereof is 32bit, and the address space of the system is 4G; the data bit width of the ZSP500 processor is 32bit, and the address bit width thereof is 24bit. The ARM11 processor and the ZSP500 are heterogeneous processors.

Off-chip memory, in-chip memory and local memory store programs and data, wherein the off-chip memory may adopt DDR-SDRAM, and the in-chip memory may adopt RAM.

Here, the off-chip memory serves as main memory operated by the ARM11 processor; the in-chip memory serves as boot memory of the ARM11 processor after booted for storing programs with fixed address, such as the interrupted entrance program, when the system operates.

The local memory serves as boot memory of the ZSP500 processor and main memory of the ZSP500 processor; the local memory is directly connected to the ZSP500 processor so as to improve the access speed and improve the performance of the intensive processor (such as, the ZSP) to maximum extent.

The address mapping modules 0,1, 2, and 3 are configured to convert logic address into physical address.

Here, the address mapping modules 0, 1, 2, 3 are connected with two ARM11 processors and two ZSP500 processors respectively. After sent addresses are mapped through the address mapping module, the ARM11 processors and the ZSP500 processors can access into slave devices correctly. A ZSP500 processor cannot directly access the 4G address space of an ARM11 processor; after the address mapping made by the address mapping module, the ZSP500 processor can access into a slave device of the ARM 11 processor so as to realize the expanded access function.

The DMA module is configured to transport data, wherein the DMA module can be controlled by the four processors.

The BOOT module is configured to take the boot program of each processor out of the non-volatile memory medium when the system is powered on, and to place the boot program into the boot memory corresponding to each processor and guiding the boot of each processor.

Here, the non-volatile memory medium is the Flash in the peripheral controller; the boot memory corresponding to the ARM11 processor is the in-chip memory shown in Fig. 3; and the boot memory of the ZSP500 processor is the local memory included in the ZSP500.

The in-chip bus (AXI, Advanced eXtensile Interface), a high-performance bus (AHB, Advanced High-performance Bus) and a peripheral bus (APB, Advanced Peripheral Bus) are configured to transmit data, addresses and control signals.

Here, the AXI, serving as the first-level bus of the system, is an in-chip bus having high performance, high bandwidth and low delay. The AXI supports multiple master devices to access into multiple slave devices, and has a data bit width of 64bit and an address bit width of 32bit. The AXI provides high-speed data path for processors, main memories, in-chip memories, second-level buses and the like. When multiple master devices request for accessing into the same slave device at the same time, the arbitrator of the AXI bus is responsible for judging the order of the access requests from the multiple processors.

The AHB and APB, serving as the second-level buses of the system and connected with the first-level bus through bridgees. The AHB has a matrix structure supporting multiple master devices to access into multiple slave devices at the same time,wherein the AHB has a data bit width of 32bit and an address bit width of 32bit. The APB is configured to support single master device to access into multiple slave devices without needing of the interconnection to a device with high-performance interface or high-bandwidth interface,wherein the APB has an address bit width of 32bit and a data bit width of 16bit.

The bridge 1 and the bridge 2 are configured to switch between AXI and APB and between AXI and AHB respectively.

Specifically, the bridge 1 is responsible for switching between AXI and APB, and the bridge 2 is responsible for switching between AXI and AHB. The AXI bus, the AHB bus and the APB bus can work at different clock frequencies, different bandwidths or different data bit width. The bridges act as buffer for buffering the control command and data of the AXI bus of the system into the buffer; and after the control command is analyzed, the received data are allocated to the corresponding slave devices according to protocols of the AHB or the APB.

The peripheral controller is a FLASH, a USB, an I2C, a SPI, a UART, an I2S and the like.

The bypass path is configured to connect the second ZSP500 processor with the AHB.

Here, the bypass path is specifically for enabling the second ZSP500 processor to access into the slave device connected to the AHB directly without passing through the AXI.

Multiple mailboxes are for the communication among the processors, and wherein each two processors share one mailbox.

Here, the specific process of each unit in the apparatus of the embodiment is described in above content in detail, which is omitted here.

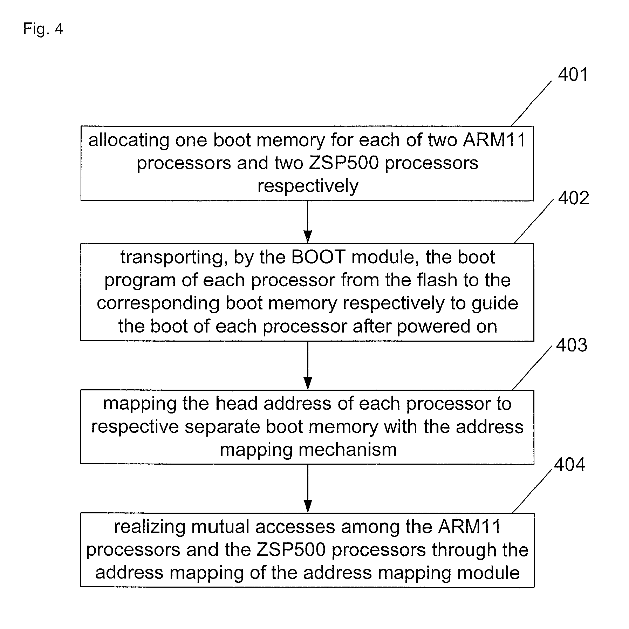

According to the system of Fig. 3, the method of mutual access of the ARM11 processors and the ZSP500 processors is shown in Fig. 4, and the method comprises the following steps:
Step 401: one separate boot memory is allocated for each of the two ARM11 processors and the two ZSP500 processors respectively.

Here, the boot memory of the ARM11 processor is an in-chip memory, and the boot memory of the ZSP500 processor is a local memory.

Step 402: the boot program of each processor is transported by the BOOT module from the flash to the corresponding boot memory respectively to guide the boot of each processor after it is powered on.

Step 403: after the processor is booted, the head address of each processor is mapped to respective separate boot memory with the address mapping mechanism.

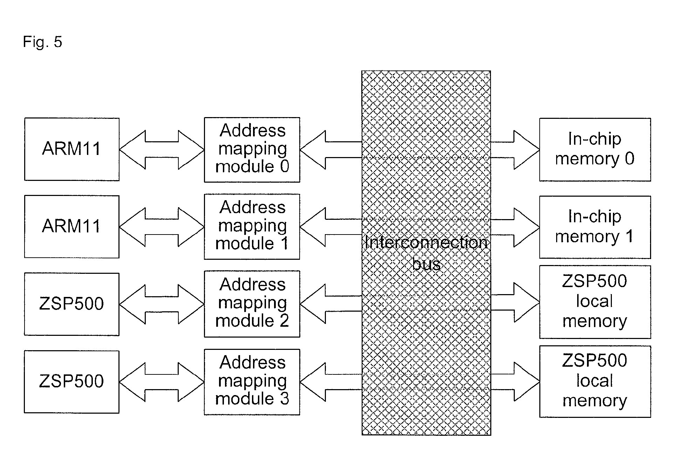

Here, the implementation of the address mapping mechanism is shown in Fig. 5 as follows: after the boot initialization of the processor, the address mapping module of the ARM11 processor maps the head address of the processor to the corresponding boot memory, that is to say, the first ARM11 processor maps its head address to the in-chip memory 0 through the address mapping 0; the second ARM11 processor maps its head address to the in-chip memory 1 through the address mapping 1; the first ZSP500 processor maps the address to the local memory thereof through the address mapping 2; and the second ZSP500 processor maps the address to the local memory thereof through the address mapping 3.

Each boot memory stores the program with fixed address such as the interrupted entrance program of the corresponding processor when the system operates, and the head address of the processor is converted and then stored into the corresponding boot memory so that the processor can perform its own interrupted entrance program correctly. Thus, the conflicts among programs with fixed addresses, such as the interrupted entrance programs of the multiple processors, can be avoided.

Step 404: after the boot initialization of the processor, mutual accesses among the ARM11 processors and the ZSP500 processors are realized through the address mapping of the address mapping module; and the peripheral devices and the memories are shared by the ARM11 processors and the ZSP500 processors.

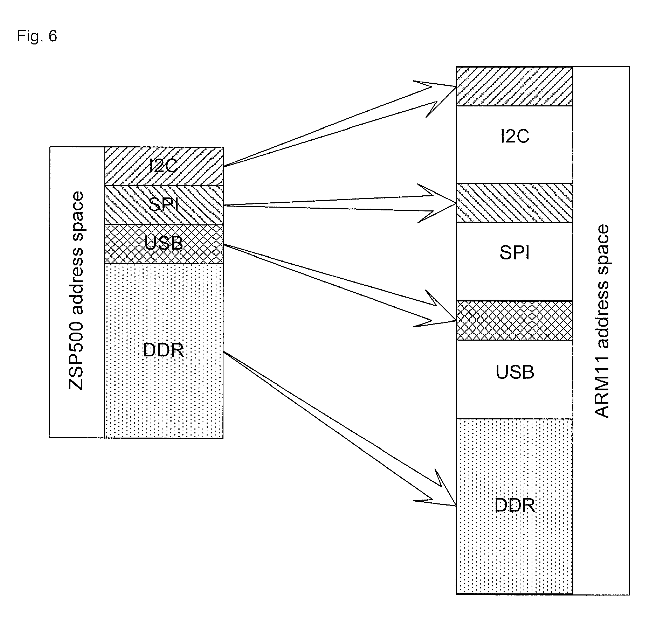

The expanded access mechanism of the ZSP500 processors is shown in Fig. 6 and is specifically as follows:
the address bit width of the ARM11 processor is 32bit, the address space of the system is 4G; and the address bit width of the ZSP500 processor is 24bit. For the different address bits, the ZSP500 processor cannot access into the whole 4G address space of the ARM 11; and
the address mapping module of the ZSP500 processor maps the address space allocated for a slave device by the ZSP500 processor to the address space allocated for a corresponding slave device of the ARM11. Thus, the ZSP500 processor realizes the expanded access.

For example, the address space allocated for a USB by the ZSP500 processor is 1M, and the address space allocated for the USB by the ARM11 processor is 2M. Actually, the USB may only use a front portion of the address space rather than the whole 2M address space. At this moment, the address space of the USB of the ZSP500 processor can be mapped to the address space used by the corresponding USB of the ARM11 processor through the address mapping module, so that the ZSP500 processor can access into the USB of the ARM11 processor by sending out a logic address for accessing into the USB of the ARM 11 processor.

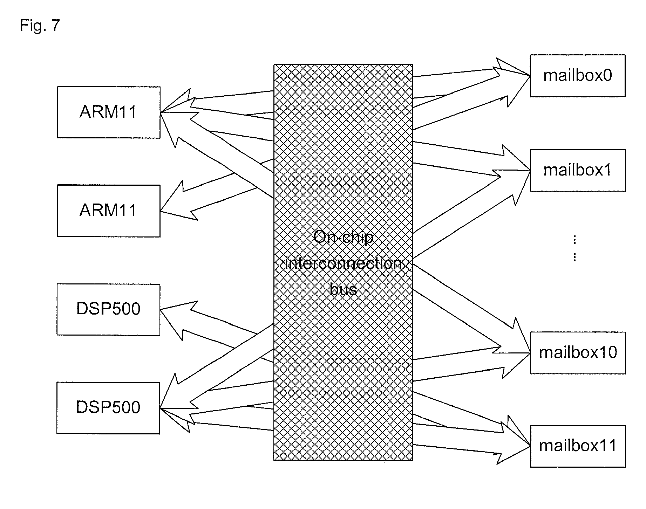

Fig. 7 is a schematic diagram of a multi-core communication of the embodiment. The principle for realizing the mutual control between processors through the mailbox is shown in Fig. 7 and is as follows: each two processors shares one mailbox, and two processors accomplish the communication by accessing into the mailbox and writing control information in the mailbox. Specifically speaking, processor A writes the control information into mailbox0; processor B having relationship therewith reads the control information from mailbox0 so as to realize the control of processor A to processor B; on the contrary, if processor B needs to control processor A, there is a need to write the control information into mailbox1, and processor A reads the control information from mailbox1 to realize the control of processor B to processor A, so as to realize mutual control of the two processors.

A mailbox is only seen and accessed by two communicated processors through the address mapping by the address mapping module, while other processors have no right to access into the mailbox. Thus, the reliability of the communication is guaranteed. The system of the embodiment has four processors; as the mailbox is only read and written in a single way, the system of the embodiment needs 12 mailboxes.

It is thus clear that, by adopting the solution of the embodiment of the present disclosure, the heterogeneous processors, such as the ARM11 processors and the ZSP500 processors, can realize complete mutual access, completely share the peripherals and the memories, and thereby improve the system performance.

The above is only the preferred embodiment of the present disclosure and not intended to limit the scope of the present disclosure. Any modifications, equivalent replacements, improvements and the like within the spirit and principle of the present disclosure shall fall within the scope of the present disclosure.

## Claims

1. A method of complete mutual access of multiple processors, comprising the following steps:
allocating a separate boot memory and a separate address mapping module for each processor; and
realizing the mutual access among the multiple processors through the address mapping module after any processor is booted.

2. The method according to claim 1, further comprising: before the processor is booted, guiding each processor to be booted after powered on.

3. The method according to claim 2, further comprising: mapping a head address of each processor to the boot memory corresponding to the processor through the address mapping module during boot initialization of the processor.

4. The method according to claim 1, 2, or 3, further comprising: setting a mailbox for sharing communication between each two processors.

5. The method according to claim 4, wherein realizing the mutual access among multiple processors comprises: converting, by the address mapping module, a logic address sent out by a processor into a physical address identifiable by another processor so as to realize the mutual access among the processors.

6. A system of complete mutual access of multiple-processors, comprising: a multi-processor module, one or more address mapping modules, an on-chip interconnection bus, and a memory module, wherein
the multi-processor module includes one or more processors for processing all data in the system;
the address mapping module is configured to convert a logic address sent out by a processor in the multi-processor module into a corresponding physical address identifiable by another processor;
the on-chip interconnection bus is configured to transmit data, data addresses and control signals; and
the memory module includes a main memory and one or more boot memories for storing application programs and data;
wherein each processor corresponds to one boot memory and one address mapping module.

7. The system according to claim 6, further comprising: at least one mailbox and/or at least one peripheral controller, wherein
each mailbox is arranged between each two processors for sharing communication therebetween; and
the peripheral controller is configured to carry a peripheral device.

8. The system according to claim 6 or 7, further comprising: a boot module and/or a Direct Memory Access (DMA) module, wherein
the boot module is configured to guide the boot of each processor; and
the DMA module is configured to transport data.

9. The system according to claim 8, wherein the on-chip interconnection bus includes at least one level of buses, wherein
a first-level bus is configured to connect the multi-processor module with the memory module; and
a second-level bus or a subordinate level bus is configured to connect a superior bus with the peripheral controller and the mailbox.

10. The system according to claim 9, further comprising: a bridge configured to connect two levels of buses.

11. The system according to claim 10, further comprising: a bypass module configured to provide the processor with a communication path for directly accessing the second-level bus without passing through the first-level bus.
